# EUROPEAN PATENT APPLICATION

(11) **EP 4 350 614 A1**
(43) Date of publication of application: **10.04.2024**
(21) Application number: 22811422.9
(22) Date of filing: 27.05.2022
(51) Int. Cl.: G06T 7/00, G06N 20/00

(54) **TRAINED MODEL GENERATING DEVICE, TRAINED MODEL GENERATING METHOD, AND RECOGNITION DEVICE**

(30) Priority: 28.05.2021 JP 2021090676
(71) Applicant: Kyocera Corporation, Kyoto-shi Kyoto 612-8501 (JP)
(72) Inventor: ASATANI Minami, Kyoto-shi, Kyoto 612-8501 (JP)
(74) Representative: TBK
(86) International application number: PCT/JP2022/021815
(87) International publication number: WO 2022/250154

(57) **Abstract**

A trained model generating device includes a controller configured to generate a trained model output unit that outputs a recognition result of a recognition target contained in input information. The controller acquires an adapter that can convert the input information prior to inputting the input information into at least one base model. The at least one base model is generated by performing first training using teacher data including training target information identical to or related to the input information. The adapter is generated by performing second training using teacher data including information different from information used in the first training, out of the training target information, while the adapter is coupled to the at least one base model. The controller generates a target model by performing third training using teacher data including information different from both the information used in the first training and the information used in the second training out of the training target information. The controller generates the trained model by coupling the adapter and the target model to each other.

## Description

### CROSS-REFERENCE TO RELATED APPLICATIONS

This application claims priority of Japanese Patent Application No. 2021-90676 (filed May 28, 2021), the entire disclosure of which is hereby incorporated by reference.

### TECHNICAL FIELD

The present disclosure relates to a trained model generating device, a trained model generating method, and a recognition device.

### BACKGROUND OF INVENTION

Heretofore, a known device is configured to identify whether or not a target is included in an identification image by inputting the identification image to a discrimination function generated through training using a training image synthesized from a target sample (see, for example, Patent Literature 1).

### CITATION LIST

### PATENT LITERATURE

Patent Literature 1: Japanese Unexamined Patent Application Publication No. 2016-71502

### SUMMARY

In an embodiment of the present disclosure, a trained model generating device includes a controller configured to generate a trained model that outputs a recognition result of a recognition target contained in input information. The controller acquires an adapter that can convert the input information prior to inputting the input information into at least one base model. The at least one base model is generated by performing first training using teacher data including training target information identical to or related to the input information. The adapter is generated by performing second training using teacher data including information different from information used in the first training, out of the training target information, while the adapter is coupled to the at least one base model. The controller generates a target model by performing third training using teacher data including information different from both the information used in the first training and the information used in the second training out of the training target information. The controller generates the trained model by coupling the adapter and the target model to each other.

In an embodiment of the present disclosure, a trained model generating method is executed by a trained model generating device configured to generate a trained model that outputs a recognition result of a recognition target contained in input information. The trained model generating method includes acquiring an adapter that can convert the input information prior to inputting the input information into at least one base model, the at least one base model being generated by performing first training using teacher data including training target information identical to or related to the input information, the adapter being generated by performing second training using teacher data including information different from information used in the first training, out of the training target information, while the adapter is coupled to the at least one base model. The trained model generating method includes generating a target model by performing third training using teacher data including information different from both the information used in the first training and the information used in the second training out of the training target information. The trained model generating method includes generating the trained model by coupling the adapter and the target model to each other.

In an embodiment of the present disclosure, a recognition device includes a trained model that outputs a recognition result of a recognition target contained in input information. The trained model includes an adapter that can convert the input information prior to inputting the input information into at least one base model. The at least one base model is generated by performing first training using teacher data including training target information identical to or related to the input information. The adapter is generated by performing second training using teacher data including information different from information used in the first training, out of the training target information, while the adapter is coupled to the at least one base model. The trained model includes a target model generated by performing third training using teacher data including information different from both the information used in the first training and the information used in the second training out of the training target information. The trained model is configured by coupling the adapter and the target model to each other.

### BRIEF DESCRIPTION OF THE DRAWINGS

FIG. 1 is a block diagram illustrating an example configuration of a trained model generating system according to an embodiment.
FIG. 2 is a schematic diagram illustrating a general purpose library and a trained model to which an image adapter is coupled.
FIG. 3 is a diagram illustrating an example of an image adapter.
FIG. 4 is a schematic diagram illustrating generation of an image adapter coupled to multiple base models and generation of a trained model by transferring the image adapter to the trained model.
FIG. 5 is a flowchart illustrating example procedures of a trained model generating method.
FIG. 6 is a schematic diagram illustrating an example configuration of a robot control system.

### DESCRIPTION OF EMBODIMENTS

Improvement of recognition accuracy in recognition using trained models is required. Recognition accuracy can be improved by a trained model generating device, a trained model generating method, and a recognition device according to an embodiment of the present disclosure.

### (Example Configuration of Trained Model Generating Device 20)

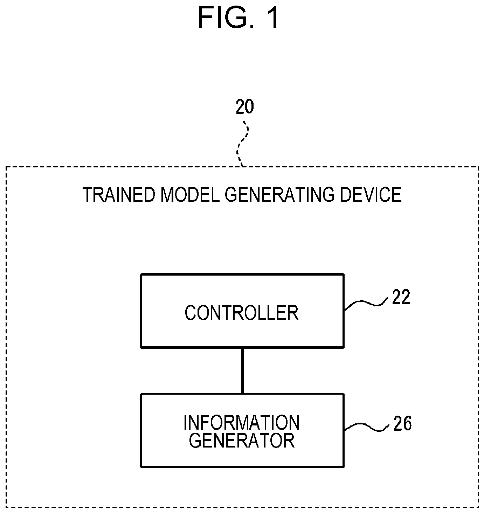

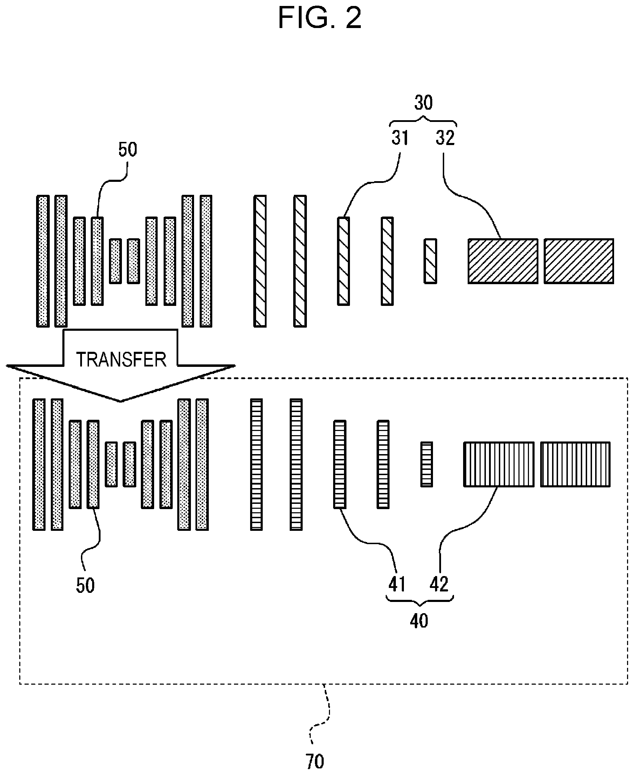

As illustrated in FIG. 1, a trained model generating device 20 according to an embodiment of the present disclosure includes a controller 22 and an information generator 26. The trained model generating device 20 generates a trained model 70 (refer to FIG. 2).

The controller 22 acquires information about a target to be used in training from the information generator 26. A target to be used in training is also referred to as a training target. The controller 22 executes training using information about a training target acquired from the information generator 26 as teacher data and outputs information or data based on training results. For example, if the trained model 70 is generated as a model for recognizing a particular object, such as an industrial component, the training target for generating the trained model 70 may include the object itself that is to be recognized, or may include other objects. Objects that can be recognized by the trained model 70 are also referred to as recognition targets.

The controller 22 may include at least one processor in order to provide control and processing capabilities for performing various functions. The processor may execute programs that realize various functions of the controller 22. The processor may be implemented as a single integrated circuit. An integrated circuit is also referred to as an IC. The processor may be implemented as multiple integrated circuits and discrete circuits connected so as to be able to communicate with each other. The processor may be realized based on various other known technologies.

The controller 22 may include a storage unit. The storage unit may include an electromagnetic storage medium such as a magnetic disk, or may include a memory such as a semiconductor memory or a magnetic memory. The storage unit stores various types of information. The storage unit stores programs and so forth to be executed by the controller 22. The storage unit may be configured as a non-transient readable medium. The storage unit may function as a working memory of the controller 22. At least part of the storage unit may be configured so as to be separate from the controller 22.

The information generator 26 outputs to the controller 22 teacher data used in training in the controller 22. The information generator 26 may generate the teacher data or may acquire the teacher data from an external device.

The information generator 26 may include at least one processor in order to provide control and processing capabilities for generating or acquiring teacher data. The processor may execute a program for generating or acquiring teacher data. The information generator 26 may be configured identically or similarly to the controller 22. The information generator 26 may be configured so as to be integrated with the controller 22.

The information generator 26 may generate information representing the actual form of a training target as teacher data. The information representing the actual form of the training target is also referred to as real information. The information generator 26 may include a camera that captures a real image of a training target. The information generator 26 may perform annotation, in which information such as a label is assigned to a real image of a training target. The information generator 26 may accept an operation input from a user regarding annotation. The information generator 26 may perform annotation based on a pre-prepared training model for annotation. The information generator 26 can generate real information by performing annotation on a real image of a training target.

The information generator 26 virtually generates, as teacher data, information about a training target as information on a task identical to or related to input information input to the trained model 70. If the trained model 70 is intended to be used for a task of recognizing and classifying objects contained in an image, the input information is an image in which an object is captured. Tasks that are identical to or related to the input information correspond to tasks that are performed using the input information to be processed by the trained model 70, or tasks that are performed using information similar to or related to the input information. For example, in a task of classifying screws and nails of prescribed types contained in an image, a task that is identical to the input information would correspond to a task of classifying the screws and nails that are actually to be classified by the trained model 70. A task related to the input information corresponds to a task of classifying screws and nails from images that also contain other types of screws or nails similar to the prescribed types of screws and nails, or objects similar to these. Virtually generated information about a training target is also referred to as pseudo information. The pseudo information may be, for example, an image of a screw or a nail that is a recognition target, depicted by computer graphics (CG) or the like, rather than image information obtained by actually capturing the actual screw or nail. The tasks, for example, may include a classification task in which recognition targets contained in input information are classified into at least two categories. The tasks may include, for example, a task of distinguishing whether a recognition target is a screw or a nail, or an evaluation task of calculating at least one type of evaluation value based on the input information. A classification task can be, for example, subdivided into a task of distinguishing whether a recognition target is a dog or a cat. Tasks are not limited to classification tasks, and may include tasks in which various other operations are realized. Tasks may include segmentation determined from pixels belonging to a particular target. Tasks may include object detection in which an encompassing rectangular region is detected. Tasks may include estimation of the posture of a target. Tasks may include keypoint detection for finding certain feature points.

Here, if both the input information and the information about the training target are information on classification tasks, then the relationship between the input information and the information about the training target is assumed to be one of related tasks. Furthermore, if both the input information and the information about the training target are information on a task of distinguishing whether the recognition target is a dog or a cat, then the relationship between the input information and the information about the training target is assumed to be one of identical tasks. The relationship between the input information and the information about the training target is not limited to these examples and can be defined using various conditions.

The information generator 26 may generate information that virtually represents the appearance of the training target in order to generate pseudo information. The information generator 26 may generate modeling data, for example, three-dimensional computer aided design (CAD) data, of the appearance of the training target, as information that virtually represents the appearance of the training target. The information generator 26 may generate an image of the training target as information that virtually represents the appearance of the training target. The information generator 26 may perform annotation to assign information such as labels to modeling data or images and so on that virtually represent the appearance of the training target. The information generator 26 can generate pseudo information by performing annotation on the generated information that virtually represents the appearance of the training target.

The information generator 26 may acquire information that virtually represents the appearance of the training target from an external device. The information generator 26 may accept an operation input from a user regarding modeling data. The information generator 26 may acquire data in which annotations have been made to information that virtually represents the appearance of the training target. The information generator 26 may accept an operation input from a user regarding annotation. The information generator 26 may make annotations to information that virtually represents the appearance of the training target based on a pre-prepared training model for annotation.

### (Example of Trained Model 70)

As illustrated in FIG. 2, the trained model generating device 20 generates the trained model 70 that outputs a recognition result of a recognition target contained in input information. The trained model 70 is configured as a model obtained by coupling an image adapter 50 to the input side of a target model 40. The image adapter 50 is configured to be capable of inputting input information. The image adapter 50 is also simply referred to as an adapter.

The trained model generating device 20 performs the following operations as preparation for generating the trained model 70. The trained model generating device 20 generates a base model 30 by performing training based on pseudo information. Training performed in order to generate the base model 30 is also referred as first training. Teacher data used in the first training may include training target information that is identical to or related to the input information. The trained model generating device 20 may use real information instead of pseudo information or may use both pseudo information and real information when generating the base model 30. Pseudo information used in training for generating the base model 30 is also referred to as first pseudo information. The trained model generating device 20 generates the image adapter 50 by performing further training based on real information with the image adapter 50 coupled to the input side of the base model 30. Training performed in order to generate the image adapter 50 is also referred to as second training. The teacher data used in the second training includes training target information identical to or related to the input information and may include information different from information used in the first training. Real information used in the training for generating the image adapter 50 is also referred to as first real information. Note that second pseudo information and second real information described below may be used as the first pseudo information and the first real information.

The trained model generating device 20 generates the target model 40 by performing training based on pseudo information or real information without coupling the image adapter 50. Training performed in order to generate the target model 40 is also referred to as third training. Teacher data used in the third training includes training target information identical to or related to the input information and may include information different from both the information used in the first training and the information used in the second training. Pseudo information used in training for generating the target model 40 is also referred to as the second pseudo information. Real information used in training for generating the target model 40 is also referred to as second real information. The trained model generating device 20 generates the trained model 70 by transferring the image adapter 50 generated in advance through pre-training while coupled to the base model 30 and coupling the image adapter 50 to the input side of the newly generated target model 40. The trained model generating device 20 may transfer the base model 30 used in the pre-training as the target model 40. In addition, the trained model generating device 20 may generate the trained model 70 by coupling the image adapter 50 and the target model 40 to each other and performing further training using the second pseudo information and the second real information as teacher data.

The trained model generating device 20 can generate the image adapter 50 in advance through pre-training, and then generate the trained model 70 by simply generating the target model 40 through training based on just pseudo information and then coupling the image adapter 50 to the target model 40. As a result, the workload of generating the target model 40 can be reduced. In pre-training, real information, pseudo information, or a combination of real information and pseudo information may be used as the teacher data.

The base model 30 and target model 40 are configured as convolution neural networks (CNN) having multiple layers. Convolution based on prescribed weighting factors is performed in each layer of the CNN for information input to the base model 30 and the target model 40. The weighting factors are updated during the training of the base model 30 and the target model 40. The base model 30 and the target model 40 may be configured by a VGG 16 or a ResNet 50. The base model 30 and the target model 40 are not limited to these examples and may be configured as various other types of models.

The base model 30 is assumed to include a first base model 31 and a second base model 32. The target model 40 is assumed to include a first target model 41 and a second target model 42. The first base model 31 and the first target model 41 are also referred to as backbones. The second base model 32 and the second target model 42 are also referred to as heads. The base model 30 and the target model 40 each include a backbone and a head. Each of the trained models in the target model 40 may be different from the trained models in the base model 30. For example, different training processing may be performed for the trained models included in the target model 40 than for the trained models included in the base model 30. More specifically, training processing may be performed using teacher data containing different information. A pre-training model contained in the target model 40 may be the same as a pre-training model contained in the base model 30.

The backbone is configured to output results obtained by extracting feature values of input information. The feature values represent, for example, features of the appearance of the training target as numerical values. The head is configured to make prescribed judgements about input information based on the output of the backbone. Specifically, the head may output recognition results for recognition targets contained in the input information based on the feature values of the input information output by the backbone. In other words, the head is configured to perform recognition of recognition targets as a prescribed judgement. For example, in a task of distinguishing a horse and a zebra from each other, a feature value could be a parameter representing the proportion of a striped pattern area to the body surface. The prescribed judgement could be to determine whether the recognition target is a horse or a zebra by comparing the proportion of a striped pattern area to the body surface with a threshold. In addition, for example, in a task of distinguishing abalone and tokobushi from each other, the feature value could be a parameter representing size or the number of holes in the shell. The prescribed judgment could be to compare the size or the number of holes in the shell to a threshold to determine whether the recognition target is an abalone or a tokobushi.

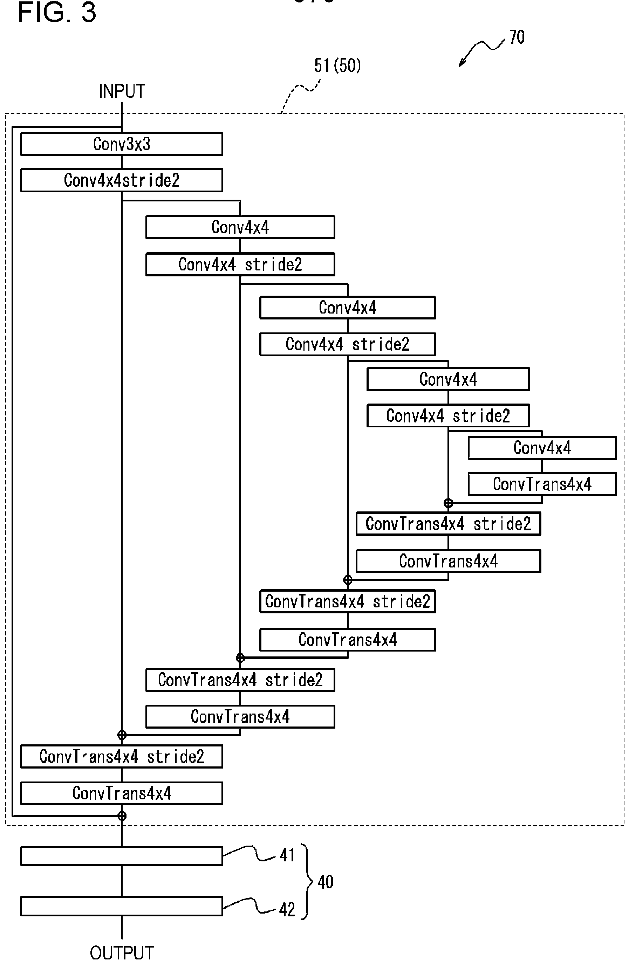

The image adapter 50 may be configured as a CNN having multiple layers, as illustrated in FIG. 3. The image adapter 50 is configured to be able to convert information to be input to the base model 30 or the target model 40 prior to inputting the information to the base model 30 or the target model 40. The image adapter 50 is coupled to the input side of target model 40 in FIG. 3, but could instead be coupled to the input side of the base model 30.

In the example in FIG. 3, blocks labeled "Conv" indicate that convolution is performed. Convolution is also referred to as down sampling. The blocks labeled "Conv Trans" indicate that inverse convolution is performed. Inverse convolution is also referred to as up sampling. Inverse convolution may also be referred to as reverse convolution. A block labeled "Conv 4x4" indicates that the size of a filter used to perform convolution on 2D data is 4x4. The filter, also called a kernel, corresponds to a set of weighting factors used when performing convolution or inverse convolution of information input to the block. A block labeled "Conv Trans 4x4" indicates that the size of the filter used to perform inverse convolution on 2D data is 4x4. A block labeled "stride 2" indicates that the filter is shifted by two elements when performing convolution or inverse convolution. Conversely, a block not labeled "stride 2" indicates that the filter is shifted by one element when performing convolution or inverse convolution.

When the image adapter 50 is coupled to the input side of the base model 30, the image adapter 50 converts the pseudo information or real information input for training and outputs the converted pseudo information or real information to the base model 30. If the pseudo information or real information is an image, the image adapter 50 converts the input image and outputs the converted image to the base model 30. The image adapter 50, when coupled to the input side of the target model 40, converts and outputs the image of the recognition target contained in the input information input to the trained model 70. The image adapter 50 may also convert the mode of the input image and then output the image. The image adapter 50 may convert the mode of the input image to, for example, but not limited to, a mode in which the edges of the image are emphasized or shadowed areas are brightened and then output the image. The image adapter 50 allows conversion to a mode so that the target model 40 connected thereto can process the task correctly. For example, if the task is to recognize an object contained in an image, the mode is converted so that the base model 30 or the target model 40 can output a result in which the recognition target is correctly recognized.

### (Example Operation of Trained Model Generating Device 20)

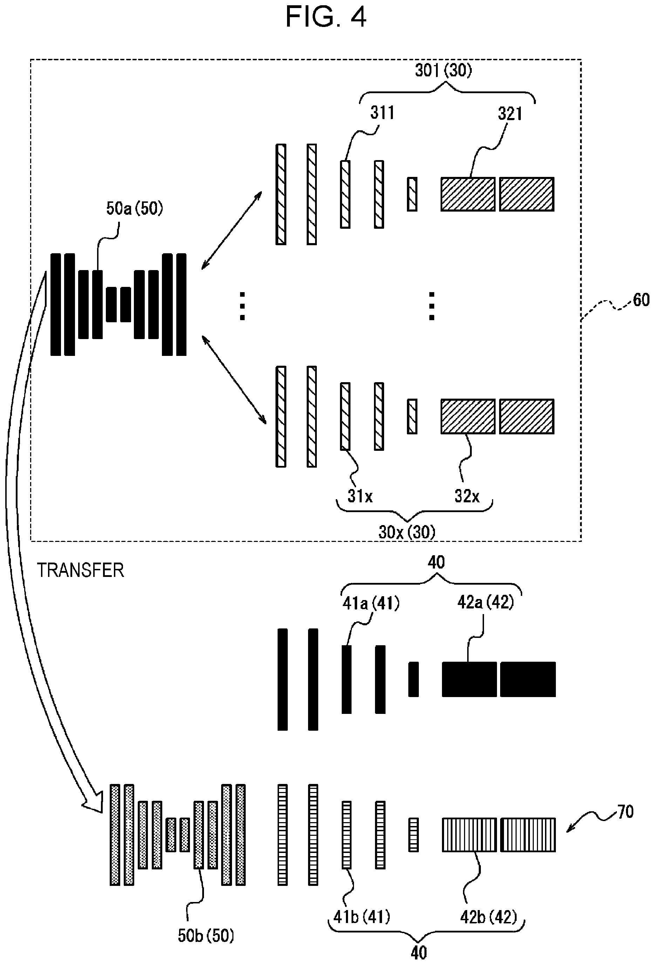

The controller 22 of the trained model generating device 20 can generate the trained model 70 by performing the operations schematically illustrated in FIG. 4, for example. The operation of the trained model generating device 20 is described below with reference to FIG. 4.

The controller 22 generates at least one base model 30 as a First Step. Specifically, the controller 22 acquires the first pseudo information as teacher data from the information generator 26. The controller 22 generates the base model 30 by performing training based on the first pseudo information. The controller 22 updates the base model 30 to increase the probability that the information output from the base model 30, which is being trained, will be information representing the training target contained in the first pseudo information. The controller 22 may update the base model 30 by updating the weighting factors of the base model 30. Before training begins, the base model 30 may be in a predefined initial state. In other words, the weighting factors of the base model 30 may set to predetermined initial values. By executing the operation described as the First Step, the controller 22 can generate the base model 30 by performing training based on the first pseudo information. Since the training for generating the base model 30 is performed prior to the training for generating the image adapter 50 in a Second Step described below, this training can be called pre-training. Although the controller 22 is described as acquiring the first pseudo information as teacher data from the information generator 26 in the First Step, the process is not limited to this. Not only the first pseudo information, but also the first real information can be used as the teacher data. The second pseudo information or the second real information may be used as the teacher data.

In this embodiment, the controller 22 generates x base models 30. The x base models 30 are distinguished from each other as a first base model 301 to an xth base model 30x. The controller 22 acquires different information as the first pseudo information used in training for generating each base model 30. The first base model 301 includes a first base model 311 and a second base model 321. The xth base model 30x includes a first base model 31x and a second base model 32x.

The controller 22 generates the image adapter 50 as a Second Step. Specifically, the controller 22 may additionally acquire real information as teacher data from the information generator 26. The controller 22 updates the image adapter 50 by training the image adapter 50 based on the first pseudo information and the real information, with the image adapter 50 coupled to the trained base model 30 generated in the First Step. The controller 22 may update the image adapter 50 by updating the weighting factors of the image adapter 50. The controller 22 acquires different information as the real information used in training for generating each base model 30. Before training begins, the image adapter 50 coupled to the base model 30 may be in a predefined initial state. In other words, the weighting factors of the image adapter 50 may be set to predetermined initial values. An image adapter 50a in the process of being training, which is a target of to be updated by training, is represented by a black rectangle. In the Second Step, the controller 22 is described as updating the image adapter 50 by training the image adapter 50 based on the first pseudo information and real information with the image adapter 50 coupled to the trained base model 30 generated in the First Step, but the process is not limited to this. The controller 22 may update the image adapter 50 by training the image adapter 50 based on only one out of the first pseudo information and the real information.

The controller 22 performs training based on the first pseudo information or real information corresponding to each base model 30 with the image adapter 50a in the process of being training coupled to each of the x base models 30. In other words, the controller 22 performs training by inputting the first pseudo information and real information to the image adapter 50a being trained, and inputting the output of the image adapter 50a being trained to each of the x base models 30. The controller 22 generates the image adapter 50 by updating the image adapter 50 through training. The controller 22 updates the image adapter 50 so that information output from each base model 30 that has been input with the first pseudo information via the image adapter 50 and information output from each base model 30 that has been input with the real information via the image adapter 50 become more similar to each other. The controller 22 may update the image adapter 50 to increase the probability that information output from each base model 30 that has been input with the first pseudo information via the image adapter 50 and information output from each base model 30 that has been input with the real information via the image adapter 50 match each other. The controller 22 may update each base model 30 together with the image adapter 50 by performing training, or may update only the image adapter 50.

The controller 22 may perform training on each combination of one base model 30 coupled to the image adapter 50a being trained. The controller 22 may perform training in parallel by grouping together multiple combinations of one base model 30 coupled to the image adapter 50a being trained.

The controller 22 can generate the image adapter 50 through training based on the first pseudo information and the real information by performing the operation described as the Second Step. The training for generating the image adapter 50 can be performed independently of the training for generating the target model 40 in a Third Step, described below.

The controller 22 generates the target model 40 as the Third Step. Specifically, the controller 22 acquires the second pseudo information as teacher data from the information generator 26. The controller 22 acquires, as the second pseudo information, information on a task identical to or related to the first pseudo information used in the training for generating the base model 30. The controller 22 generates the target model 40 by performing training based on the second pseudo information. The controller 22 inputs the second pseudo information to the target model 40 without the second pseudo information being input to and converted by the image adapter 50. The controller 22 updates the target model 40 to increase the probability that the information output from the target model 40 that is being trained will be information representing the training target contained in the second pseudo information. The controller 22 may update the target model 40 by updating the weighting factors of the target model 40. Before training begins, the target model 40 may be in a predefined initial state. In other words, the weighting factors of the target model 40 may set to predetermined initial values. The target model 40, which is to be updated by training, includes a first target model 41a and a second target model 42a, which are being trained, and is represented by black rectangles. The controller 22 can generate the target model 40 by performing training based on the second pseudo information by performing the operation described as the Third Step. Although the controller 22 is described as acquiring the second pseudo information as teacher data from the information generator 26 in the Third Step, the process is not limited to this. Not only the second pseudo information but also the second real information may be used as the teacher data. In the Third Step, the controller 22 inputs the second pseudo information to the target model 40 without the second pseudo information being converted and updates the target model 40, but the process is not limited to this. The controller 22 may update the target model 40 and the image adapter 50 by coupling the target model 40 and the image adapter 50 to each other and performing training using the second pseudo information or the second real information or both the second pseudo information and the second real information.

As a Fourth Step, the controller 22 generates the trained model 70 by coupling the image adapter 50 to the target model 40. Specifically, the controller 22 couples a trained image adapter 50b generated in the Second Step to the trained target model 40, which includes a trained first target model 41b and second target model 42b, generated in the Third Step. In other words, the controller 22 transfers the image adapter 50 generated in the Second Step and couples the image adapter 50 to the target model 40. The target model 40 generated in the Third Step and the image adapter 50 are described as being coupled to each other in the Fourth Step, but the process is not limited to this. The base model 30 generated in the First Step may be used as the target model 40. In this case the Third Step does not need to be performed.

### <Trained Model Generating Method>

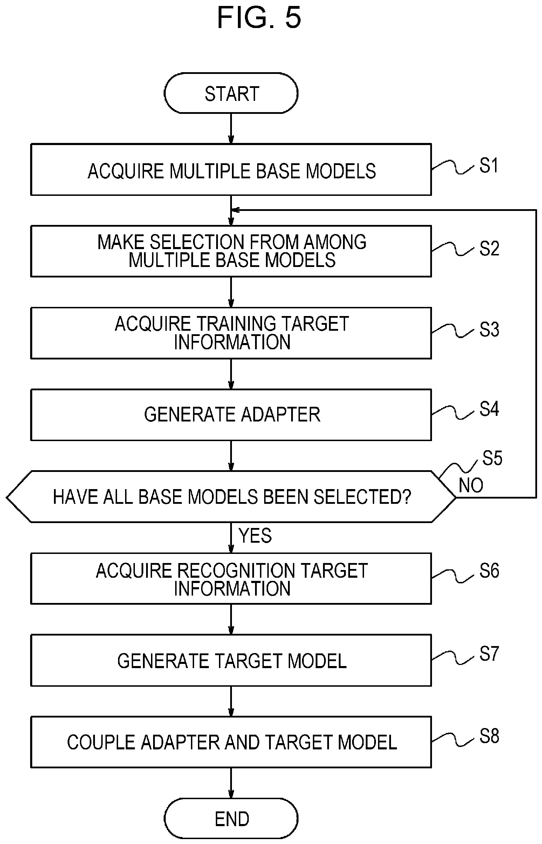

The controller 22 of the trained model generating device 20 may perform the operations described above as a trained model generating method including the procedures of the flowchart illustrated in FIG. 5. The trained model generating method may be implemented as a trained model generating program to be executed by the processor constituting the controller 22. The trained model generating program may be stored on a non-transitory computer readable medium.

The controller 22 acquires multiple base models 30 (Step S1). The controller 22 may generate the multiple base models 30 by performing training based on the first pseudo information or by acquiring the multiple base models 30 from an external device. The controller 22 acquires only the multiple base models 30 that are to be used in the training for generating the image adapter 50.

The controller 22 selects at least one base model 30 from among the multiple base models 30 (Step S2). The controller 22 acquires training target information (Step S3). Specifically, the controller 22 may acquire, as training target information, real information on a task identical to or related to the pseudo information used in the training for generating the selected base model 30.

The controller 22 generates the image adapter 50 by performing training based on the training target information with the image adapter 50 coupled to the selected base model 30 (Step S4). Specifically, the controller 22 inputs real information as the training target information to the image adapter 50. Information converted from the real information by the image adapter 50 is input to the selected base model 30. The controller 22 generates the image adapter 50 by updating the image adapter 50 based on information output from the selected base model 30.

The controller 22 judges whether or not all the base models 30 have been selected (Step S5). When all the base models 30 have not been selected (Step S5: NO), i.e., at least one base model 30 has not yet been selected, the controller 22 returns to the procedure of Step S2 in order to select the unselected base model 30.

When all the base models 30 have been selected (Step S5: YES), the controller 22 acquires recognition target information (Step S6). Specifically, the controller 22 may acquire second pseudo information on a task identical to or related to the first pseudo information used in the training for generating the selected base model 30 as the recognition target information.

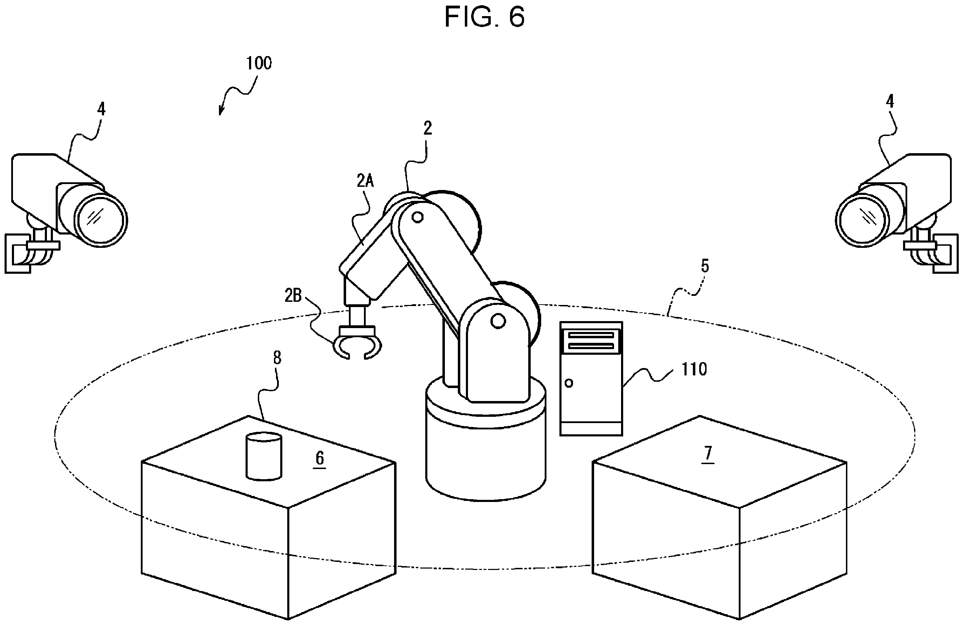

The controller 22 generates the target model 40 by performing training based on the recognition target information (Step S7). The controller 22 couples the image adapter 50 and the target model 40 to each other (Step S8). By performing the above procedures, the controller 22 can generate the trained model 70 in which the image adapter 50 and the target model 40 are coupled to each other. After execution of the procedure of Step S8, the controller 22 completes execution of the procedures of the flowchart in FIG. 5. After executing the procedure of Step S8, the controller 22 may input the input information to the generated trained model 70 and evaluate the recognition accuracy of the recognition target contained in the input information based on an output of the trained model 70. After executing the procedure in Step S8, the controller 22 may output the generated trained model 70 to a robot controller 110 (refer to FIG. 6), which will be described later.

### <Summary>

As described above, the trained model generating device 20 according to this embodiment can generate the trained model 70 by coupling the image adapter 50, which is generated by training while coupled to the base model 30, to the target model 40, which is newly generated by separate training. The trained model generating device 20 generates the image adapter 50 by performing training based on real information or pseudo information. The trained model generating device 20 generates the target model 40 by performing training based on just pseudo information. The recognition accuracy achieved by the trained model 70, which is obtained by coupling the image adapter 50 generated by training based on real information or pseudo information, has improved recognition accuracy compared to just the target model 40. Therefore, if the image adapter 50 is generated in advance by performing training based on real information or pseudo information, high recognition accuracy can be expected by coupling the image adapter 50 to the target model 40.

The trained model generating device 20 can increase recognition accuracy by generating the trained model 70 by coupling the image adapter 50 even when the target model 40 is newly generated. In other words, the recognition accuracy of the trained model 70 can be improved without needing to transfer the base model 30 to the target model 40.

Here, when at least a portion of the base model 30 is transferred in order to generate the target model 40, the act of transferring the base model 30 itself can be a constraint on the generation of the trained model 70. For example, when at least a portion of the base model 30 is transferred in order to generate a target model 40 that matches the desired recognition target for the end user of the service, the target model 40 may have difficulty matching the desired recognition target. In contrast, the trained model generating device 20 according to this embodiment does not need to transfer the base model 30 to the target model 40, and therefore the target model 40 can more easily match the model desired by the end user.

The image adapter 50 is generated through training while coupled to each of the multiple base models 30. The image adapter 50 is generated through training performed in advance by the service provider, and therefore the image adapter 50 is also referred to as an upstream task. On the other hand, the trained model 70 is generated by transferring the image adapter 50 from the upstream task and coupling the image adapter 50 to the newly generated target model 40. The trained model 70 is generated to match the recognition target desired by the end user of the service, and therefore the trained model 70 is also referred to as a downstream task.

In a downstream task, the system is required to start operating quickly with little effort needed to acquire data or by generating the trained model 70 in a short training time. On the other hand, in an upstream task, transition training can involve the use of large amounts of data and computational resources in advance in order to provide a high-quality meta-model with high speed and high generalization performance. Since the trained model generating device 20 according to this embodiment uses larger amounts of data and computational resources to generate an upstream task, a downstream task can be generated with a lighter workload, and as a result the system can start operating more quickly.

If training based on real information is not performed in a downstream task, a domain gap called Sim-to-Real can be a problem. The trained model generating device 20 according to this embodiment can improve recognition accuracy for real information even in downstream tasks in which training is not performed based on real information by transferring the image adapter 50 for domain adaptation from an upstream task to a downstream task. Specifically, in an upstream task, the image adapter 50 is generated so as to increase the recognition accuracy for real information for each of the multiple base models 30 that are generated to increase the recognition accuracy for pseudo information. The image adapter 50 is generated so as to increase the recognition accuracy of each of the multiple base models 30, and as a result, the recognition accuracy of the newly generated target model 40 in a downstream task is also increased. Generating the image adapter 50 so as to increase the recognition accuracy of each of the multiple base models 30 is also referred to as generalization of the image adapter 50, or a generalized image adaptor (GIA). GIA allows fundamentally effective improvements in image quality to be obtained for tasks, such as suppressing noise source features while emphasizing common features that perform well in the multiple base models 30. This improvement in image quality is expected to result in improvements not only for the Sim-to-Real problem, but also for recognition accuracy realized by various base models.

In this embodiment, the trained model generating device 20 may generate the image adapter 50 in an upstream task and transfer the image adapter 50 generated in the upstream task to a downstream task. The trained model generating device 20 may generate the image adapter 50 by performing training based on the second real information or the second pseudo information in just the downstream task.

### <Comparison of Recognition Accuracy>

When a recognition target is recognized from input information including real images using a model generated by training based only on generated images, which are pseudo information, the recognition accuracy is reduced due to the differences between the generated images and real images. Specifically, in a model that can recognize a recognition target with a probability of close to 100% for a generated image, the probability of recognizing a recognition target for a real image can be as low as 70%.

The trained model 70 according to this embodiment is generated as a model in which the image adapter 50, which is generated by being trained while coupled to each of the multiple base models 30, is coupled to the target model 40. The image adapter 50 can correct errors in recognition results caused by differences between generated images and real images. As a result, the probability of recognizing a recognition target for a real image can be as high as 80%. In other words, when the image adapter 50 is coupled, the probability of recognizing a recognition target can be increased compared to the case where the image adapter 50 is not coupled. In addition, the trained model 70 according to this embodiment is generated without transferring the base model 30. In other words, the probability of recognizing a recognition target for a real image can be increased without transferring the base model 30. As a result of not needing to transfer the base model 30, the target model 40 is more likely to match the model desired by the end user.

### (Example Configuration of Robot Control System 100)

As illustrated in FIG. 6, a robot control system 100 according to an embodiment includes a robot 2 and a robot controller 110. In this embodiment, the robot 2 is assumed to move a work target 8 from a work start point 6 to a work destination point 7. In other words, the robot controller 110 controls the robot 2 so that the work target 8 is moved from the work start point 6 to the work destination point 7. The work target 8 is also referred to as a target of work. The robot controller 110 controls the robot 2 based on information about the space in which the robot 2 will perform the work. Information about space is also referred to as spatial information.

### <Robot 2>

The robot 2 includes an arm 2A and an end effector 2B. The arm 2A may be configured, for example, as a 6-axis or 7-axis vertically articulated robot. The arm 2A may be configured as a 3-axis or 4-axis horizontally articulated robot or a SCARA robot. The arm 2A may be configured as a 2-axis or 3-axis perpendicular robot. The arm 2A may be configured as a parallel link robot or the like. The number of axes of the arm 2A is not limited to those in the given examples. In other words, the robot 2 includes the arm 2A connected by multiple joints and is operated by driving the joints.

The end effector 2B may include, for example, a grasping hand configured to be able to grasp the work target 8. The grasping hand may include multiple fingers. The number of fingers on the grasping hand may be two or more. The fingers of the grasping hand may include one or more joints. The end effector 2B may include a suction hand configured to be able to apply suction to the work target 8. The end effector 2B may include a scooping hand configured to be able to scoop up the work target 8. The end effector 2B may include a tool such as a drill and may be configured to be able to perform various machining operations such as drilling holes in the work target 8. The end effector 2B is not limited to these examples and may be configured to be able to perform a variety of other operations. In the configuration illustrated in FIG. 1, the end effector 2B is assumed to include a grasping hand.

The robot 2 can control the position of end effector 2B by moving the arm 2A. The end effector 2B may have axes serving as references for directions of action with respect to the work target 8. If the end effector 2B has axes, the robot 2 can control the directions of the axes of the end effector 2B by moving the arm 2A. The robot 2 controls the start and end of an operation in which the end effector 2B acts on the work target 8. The robot 2 can move or process the work target 8 by controlling the operation of the end effector 2B while controlling the position of the end effector 2B or the directions of the axes of the end effector 2B. In the configuration illustrated in FIG. 1, the robot 2 makes the end effector 2B grasp the work target 8 at the work start point 6 and moves the end effector 2B to the work destination point 7. The robot 2 makes the end effector 2B release the work target 8 at the work destination point 7. In this way, the robot 2 can move the work target 8 from the work start point 6 to the work destination point 7.

### <Sensor 3>

As illustrated in FIG. 2, the robot control system 100 further includes a sensor 3. The sensor 3 detects physical information of the robot 2. The physical information of the robot 2 may include information about the actual position or posture of each constituent part of the robot 2 or the velocity or acceleration of each constituent part of the robot 2. The physical information of the robot 2 may include information about the forces acting on each constituent part of the robot 2. The physical information of the robot 2 may include information about the currents flowing in the motors that drive the various constituent parts of the robot 2 or the torques of the motors. The physical information of the robot 2 represents the results of actual operations of the robot 2. In other words, the robot control system 100 can ascertain the results of the actual operations of the robot 2 by acquiring the physical information of the robot 2.

The sensor 3 may include a force sensor or a tactile sensor that detects force, distributed pressure, or sliding acting on the robot 2 as the physical information of the robot 2. The sensor 3 may include a motion sensor that detects the position or posture of the robot 2, or the velocity or acceleration of the robot 2 as physical information of the robot 2. The sensor 3 may include a current sensor that detects a current flowing in a motor that drives the robot 2 as physical information of the robot 2. The sensor 3 may include a torque sensor that detects the torque of a motor driving the robot 2 as physical information of robot 2.

The sensor 3 may be installed in the joints of the robot 2 or in a joint driving unit that drives the joints. The sensor 3 may be installed on or in the arm 2A or on or in the end effector 2B of the robot 2.

The sensor 3 outputs the detected physical information of the robot 2 to the robot controller 110. The sensor 3 detects and outputs physical information of the robot 2 at a prescribed timing. The sensor 3 outputs physical information of the robot 2 as time-series data.

### <Camera 4>

In the example configuration illustrated in FIG. 1, the robot control system 100 includes two cameras 4. The cameras 4 capture images of objects or humans and so on located in an influence range 5 in which operation of the robot 2 may be affected by the objects, humans, and so on. The images captured by the cameras 4 may contain monochrome luminance information, or may contain luminance information for each color represented by red, green, and blue (RGB), and so on. The influence range 5 includes the range of motion of the robot 2. Let us assume that the influence range 5 is a range obtained by extending the range of motion of robot 2 further outward. The influence range 5 may be set so that the robot 2 can be stopped before a human or the like enters the range of motion of the robot 2 when the human or the like is moving from outside the range of motion of the robot 2 toward the inside of the range of motion of the robot 2. The influence range 5 may be set, for example, to a range extending outward by a prescribed distance from the boundary of the range of motion of the robot 2. The cameras 4 may be installed so as to be able to capture a bird's eye view of the influence range 5 or range of motion of the robot 2 or the area surrounding these areas. The number of cameras 4 is not limited to two, and may be one or three or more.

### <Robot Controller 110>

The robot controller 110 acquires the trained model 70 generated by the trained model generating device 20. Based on images captured by the cameras 4 and the trained model 70, the robot controller 110 recognizes the work target 8 or the work start point 6 or the work destination point 7 and so on that exist in the space in which the robot 2 performs work. In other words, the robot controller 110 acquires the trained model 70 that has been generated in order to recognize the work target 8 and so on based on images captured by the cameras 4. The robot controller 110 is also referred to as a recognition device.

The robot controller 110 may include at least one processor in order to provide control and processing capabilities for performing various functions. Each part of the robot controller 110 may include at least one processor. Multiple parts among the parts of the robot controller 110 may be implemented using a single processor. The entire robot controller 110 may be realized using a single processor. The processor can execute programs that realize various functions of the robot controller 110. The processor may be implemented as a single integrated circuit. An integrated circuit is also referred to as an IC. The processor may be implemented as multiple integrated circuits and discrete circuits connected so as to be able to communicate with each other. The processor may be realized based on various other known technologies.

The robot controller 110 may include a storage unit. The storage unit may include an electromagnetic storage medium such as a magnetic disk, or may include a memory such as a semiconductor memory or a magnetic memory. The storage unit stores various information and programs executed by the robot controller 110. The storage unit may be configured as a non-transient readable medium. The storage unit may function as a work memory of the robot controller 110. At least part of the storage unit may be configured so as to be separate from the robot controller 110.

### (Example Operation of Robot Control System 100)

The robot controller 110 (recognition device) acquires the trained model 70 in advance. The robot controller 110 may store the trained model 70 in the storage unit. The robot controller 110 acquires captured images of the work target 8 from the cameras 4. The robot controller 110 inputs the captured images of the work target 8 to the trained model 70 as input information. The robot controller 110 acquires output information output from the trained model 70 in response to the input information. The robot controller 110 recognizes the work target 8 based on the output information and performs work of grasping and moving the work target 8.

### <Summary>

As described above, the robot control system 100 acquires the trained model 70 from the trained model generating device 20 and can recognize the work target 8 by using the trained model 70.

### (Other Embodiments)

Other embodiments are described below.

### <Loss Function>

The trained model generating device 20 may set a loss function so that the output when input information is input to the generated trained model 70 becomes closer to the output when teacher data is input. In this embodiment, cross-entropy can be used as the loss function. Cross-entropy is calculated as a value representing the relationship between two probability distributions. Specifically, in this embodiment, cross-entropy is calculated as a value representing the relationship between input pseudo information or real information and the backbone, the head, or the adapter.

The trained model generating device 20 performs training such that the value of the loss function becomes smaller. In the trained model 70 generated by performing training so that the value of the loss function becomes smaller, the output in response to input of input information can approach the output in response to input of teacher data.

The controller 22 of the trained model generating device 20 may generate the image adapter 50 by performing training to optimize the loss function for a task identical to or related to the input information with the image adapter 50 coupled to the base model 30. Optimization of the loss function may be, for example, minimization of the value of the loss function. A loss function for a task identical to or related to the input information includes the loss function of the base model 30. On the other hand, the controller 22 may generate the image adapter 50 by performing training to optimize a loss function other than that for a task identical to or related to the input information with the image adapter 50 coupled to the base model 30. Loss functions other than those for tasks identical to or related to the input information include various other significant loss functions other than the loss function of the base model 30. For example, discrimination loss or contrastive loss could be used as a loss function other than the loss function of the base model 30. Discrimination loss is a loss function used to perform training by labeling the authenticity of a generated image with a number between 1, which represents completely true, and 0, which represents completely false. In training in which discrimination loss is used as the loss function, the controller 22 learns an image output by the image adapter 50 with correct answer as a label when an image is input to the image adapter 50 as input information. In this way, the controller 22 can generate the image adapter 50 such that an image as real information and an image output by the image adapter 50 are indistinguishable to the base model 30 generated by training based on the pseudo information.

### <Mode in which Each of Multiple Base Models 30 is Applied to Training>

The controller 22 of the trained model generating device 20 generates the image adapter 50 by performing training with the image adapter 50 is coupled to each of the multiple base models 30. In other words, the controller 22 applies each of the multiple base models 30 to pre-training for generating the image adapter 50.

If the multiple base models 30 include the first base model 301 to the xth base model 30x, the controller 22 generates combinations consisting of each base model 30 coupled to the image adapter 50 one by one in sequence, and updates the image adapter 50 by training the image adapter 50 for each of these combinations. In other words, the controller 22 may apply each of the multiple base models 30, one by one in sequence, to pre-training in order to generate the image adapter 50.

The controller 22 may determine the order in which the base models 30 are applied to pre-training either randomly or based on predetermined rules. The controller 22 may perform multiple pre-training operations in parallel, in which each of the multiple combinations is applied. In other words, the controller 22 may apply multiple base models 30 to pre-training in parallel.

The controller 22 may classify the multiple base models 30 into multiple groups and apply each group in sequence to pre-training in order to generate the image adapter 50. The controller 22 may classify multiple base models 30 into one group. In this case, the controller 22 may apply multiple base models 30 classified into a group to pre-training in parallel, or may apply each of the multiple base models 30 to pre-training one at a time in sequence. The controller 22 may classify one base model 30 into each group. The controller 22 may determine the order in which each group is applied to pre-training either randomly or based on predetermined rules.

Embodiments of the trained model generating system 1 and the robot control system 100 have been described above. Embodiments of the present disclosure can be a method or program for implementing a system or device, as well as a storage medium on which a program is recorded (for example, an optical disk, an optical-magnetic disk, a CD-ROM, CD-R, CD-RW, magnetic tape, hard disk, or memory card, and so on.).

The embodiment of a program is not limited to an application program such as object code compiled by a compiler or program code executed by an interpreter, and can also take the form of a program module or the like incorporated into an operating system. Furthermore, the program may or may not be configured so that all processing is performed only in a CPU on a control board. The program may be configured to be implemented entirely or partially by another processing unit mounted on an expansion board or expansion unit added to the board as necessary.

Although embodiments of the present disclosure have been described based on the drawings and examples, please note that one skilled in the art can make various variations or changes based on the present disclosure. Please note that, therefore, these variations or changes are included within the scope of the present disclosure. For example, the functions and so on included in each constituent part can be rearranged in a logically consistent manner, and multiple constituent parts and so on can be combined into one part or divided into multiple parts.

All of the constituent elements described in the present disclosure and/or all of the disclosed methods or all of the steps of disclosed processing can be combined in any combination, except for combinations in which their features are mutually exclusive. Each of the features described in the present disclosure may be replaced by alternative features that serve the same, equivalent, or similar purposes, unless explicitly stated otherwise. Therefore, unless explicitly stated otherwise, each of the disclosed features is only one example of a comprehensive set of identical or equivalent features.

Furthermore, the embodiments according to the present disclosure are not limited to any of the specific configurations of the embodiments described above. The embodiments according to the present disclosure can be extended to all novel features, or combinations thereof, described in the present disclosure, or all novel methods, or processing steps, or combinations thereof, described in the present disclosure.

In the present disclosure, "first", "second," and so on are identifiers used to distinguish between such configurations. Regarding the configurations, "first", "second", and so on used to distinguish between the configurations in the present disclosure may be exchanged with each other. For example, identifiers "first" and "second" may be exchanged between the first pseudo information and the second pseudo information. Exchanging of the identifiers take places simultaneously. Even after exchanging the identifiers, the configurations are distinguishable from each other. The identifiers may be deleted. The configurations that have had their identifiers deleted are distinguishable from each other by symbols. Just the use of identifiers such as "first" and "second" in the present disclosure is not to be used as a basis for interpreting the order of such configurations or the existence of identifiers with smaller numbers.

### REFERENCE SIGNS

20 trained model generating device (22: controller, 26: information generator)
30 base model (31: first base model (31a: being training, 31b: trained), 32: second base model (32a: being training, 32b: trained), 301 to 30x: first to xth base models, 311 to 31x: first to xth first base models, 321 to 32x: first to xth second base models)
40 target model (41: first target model (41a: being trained, 41b: trained), 42: second target model (42a: being training, 42b: trained))
50 adapter (50a: being trained, 50b: trained)
70 trained model
100 robot control system (2: robot, 2A: arm, 2B: end effector, 3: sensor, 4: camera, 5: robot influence range, 6: work start stand, 7: work destination stand, 8: work target, 110: robot controller (recognition device))

## Claims

1. A trained model generating device comprising:
a controller configured to generate a trained model that outputs a recognition result of a recognition target contained in input information,
wherein the controller
acquires an adapter that can convert the input information prior to inputting the input information into at least one base model, the at least one base model being generated by performing first training using teacher data including training target information identical to or related to the input information, the adapter being generated by performing second training using teacher data including information different from information used in the first training, out of the training target information, while the adapter is coupled to the at least one base model,
generates a target model by performing third training using teacher data including information different from both the information used in the first training and the information used in the second training out of the training target information, and
generates the trained model by coupling the adapter and the target model to each other.

2. The trained model generating device according to claim 1,
wherein the base model is a model pre-trained using first pseudo information of a training target generated virtually as information on a task identical to or related to the input information as teacher data,
wherein the controller
trains the adapter coupled to the base model additionally using at least one out of first real information representing an actual form of the training target and the first pseudo information as teacher data, and
generates the target model by performing training using, as teacher data, second pseudo information generated virtually as data representing the recognition target or second real information representing an actual form of the recognition target.

3. The trained model generating device according to claim 2,
wherein the first pseudo information, the second pseudo information, the first real information, and the second real information include an image, and
the adapter converts a mode of an input image and then outputs the image

4. The trained model generating device according to claim 2 or 3,
wherein the base model is a model pre-trained using only first pseudo information of a training target generated virtually as information on a task identical to or related to the input information as teacher data, and
the controller generates the target model by performing training using only second pseudo information generated virtually as data representing the recognition target as teacher data.

5. The trained model generating device according to any one of claims 1 to 4,
wherein a plurality of the base model is generated by pre-training,
the adapter is configured to capable of inputting the input information to each of the plurality of base models, and
the controller generates at least the adapter by performing training by allowing an output of the adapter to be input to each of the plurality of base models.

6. The trained model generating device according to claim 5,
wherein the controller generates or updates only the adapter by performing training by allowing the output of the adapter to be input to each of the plurality of base models.

7. The trained model generating device according to claim 5,
wherein in order to generate the adapter, the controller classifies the plurality of base models into a plurality of groups and applies each group, in turn, to pre-training for generating the adapter.

8. The trained model generating device according to claim 7,
wherein the controller classifies one of the base models into each of the groups.

9. The trained model generating device according to claim 7 or 8,
wherein the controller randomly determines an order in which to apply the groups to pre-training for generating the adapter.

10. The trained model generating device according to any one of claims 1 to 9,
wherein the controller generates a target model coupled to the adapter by performing training based on second pseudo information generated virtually as data representing the recognition target.

11. The trained model generating device according to any one of claims 1 to 10,
wherein the controller generates the adapter by training the adapter with the adapter coupled to the target model.

12. The trained model generating device according to any one of claims 1 to 11,
wherein the controller trains an adapter coupled to the base model to optimize a loss function for a task identical to or related to the input information.

13. The trained model generating device according to any one of claims 1 to 11,
wherein the controller generates an adapter coupled to the base model by training the adapter to optimize a loss function other than a task identical to or related to the input information.

14. The trained model generating device according to any one of claims 1 to 13,
wherein the base model includes a first base model that outputs a result of extracting a feature value of the input information and a second base model that makes a prescribed judgment about the input information based on an output of the first base model.

15. A trained model generating method executed by a trained model generating device configured to generate a trained model that outputs a recognition result of a recognition target contained in input information, the trained model generating method comprising:
acquiring an adapter that can convert the input information prior to inputting the input information into at least one base model, the at least one base model being generated by performing first training using teacher data including training target information identical to or related to the input information, the adapter being generated by performing second training using teacher data including information different from information used in the first training, out of the training target information, while the adapter is coupled to the at least one base model,
generating a target model by performing third training using teacher data including information different from both the information used in the first training and the information used in the second training out of the training target information, and
generating the trained model by coupling the adapter and the target model to each other.

16. A recognition device comprising: a trained model that outputs a recognition result of a recognition target contained in input information,
wherein the trained model includes
an adapter that can convert the input information prior to inputting the input information into at least one base model, the at least one base model being generated by performing first training using teacher data including training target information identical to or related to the input information, the adapter being generated by performing second training using teacher data including information different from information used in the first training, out of the training target information, while the adapter is coupled to the at least one base model, and
a target model generated by performing third training using teacher data including information different from both the information used in the first training and the information used in the second training out of the training target information, and
is configured by coupling the adapter and the target model to each other.
